**Europäisches Patentamt**

**European Patent Office**

**Office européen des brevets**

(19)

(11) Veröffentlichungsnummer : **0 440 932 B1**

(12) # EUROPÄISCHE PATENTSCHRIFT

(45) Veröffentlichungstag der Patentschrift :
**16.03.94 Patentblatt 94/11**

(51) Int. Cl.$^5$ : **B01D 53/34**

(21) Anmeldenummer : **90124073.9**

(22) Anmeldetag : **13.12.90**

---

(54) **Verfahren zur Entfernung von Ammoniak aus Abgasen.**

---

(30) Priorität : **10.01.90 DE 4000540**

(43) Veröffentlichungstag der Anmeldung :
**14.08.91 Patentblatt 91/33**

(45) Bekanntmachung des Hinweises auf die
Patenterteilung :
**16.03.94 Patentblatt 94/11**

(84) Benannte Vertragsstaaten :
**AT BE DE ES FR GB IT NL**

(56) Entgegenhaltungen :
**DE-C- 342 001**
**DE-C- 539 642**

(56) Entgegenhaltungen :
**Chemie-Ingenieur-Technik vol. 39, no. 19, 10
Oktober 1967, Weinheim, BRD, S. 1101 - 1106;
H.SCHLAUG: "Verfahren zur gleichzeitigen
Gasreinigung von staub- und gasförmigen
Verunreinigungen"**

(73) Patentinhaber : **BASF Aktiengesellschaft
Carl-Bosch-Strasse 38
D-67063 Ludwigshafen (DE)**

(72) Erfinder : **Wunder, Rainer, Dr.
Am Moenchsbusch 20
W-6724 Dudenhofen (DE)**
Erfinder : **Nitzschmann, Robert E., Dr.
Anselm-Feuerbach-Strasse 6
W-6710 Frankenthal (DE)**
Erfinder : **Meyer, Bernd, Dr.
Weschnitzaecker 8
W-6942 Moerlenbach (DE)**

EP 0 440 932 B1

## Beschreibung

Vorliegende Erfindung betrifft ein Verfahren zur Entfernung von Ammoniak und gegebenenfalls Staub aus Abgasen, die bei der Herstellung von Düngemitteln anfallen.

Bei der Herstellung von ammoniumhaltigen Düngemitteln bzw. bei Düngemitteln, die Ammoniak abspalten können, z.B. Harnstoff enthaltenden Düngemitteln, fallen in verschiedenen Verfahrensstufen ammoniakhaltige Abluftströme unterschiedlicher Menge und Konzentration an, die vor der Abgabe an die Umwelt gereinigt werden müssen.

So fallen z.B. nach dem sogenannten Nitrophosphat-Prozeß, bei dem Rohphosphate mit Salpetersäure aufgeschlossen werden, in den Stufen der Kalksalpetertetrahydrat-Umwandlung, der Neutralisation der NP-Säure und den folgenden Stufen der Granulation, des Trocknens, Beschichtens und Abkühlens ammoniakhaltige Abgase an, die gegebenenfalls auch staubhaltig sein können.

Zur Entfernung von Ammoniak aus solchen Abgasen ist es bekannt, diese in einem Absorptionsverfahren mit einem säurehaltigen Waschmittel zu behandeln (vgl. Preprints 1988 Technical Conference, Edmonton, Canada, 12. bis 15. September 1988 (TA/88/12), und VDI-Berichte Nr. 730, 1989, Seiten 395-415). Die Ammoniakabsorption mit Salpetersäure ist jedoch nicht ganz so unproblematisch, wie es zunächst den Anschein hat. Selbst niedrig konzentrierte Salpetersäure hat bei den in Betracht kommenden Temperaturen einen $HNO_3$-Partialdruck, der unweigerlich zur Bildung von Ammoniumnitrataerosolen führt, wenn das Ammoniak nicht vollständig absorbiert wird. Die hierfür erforderliche zulässige Säurekonzentration muß in Abhängigkeit von der zu absorbierenden Ammoniak-Menge und der Temperatur im Absorber experimentell ermittelt werden (vgl. VDI-Berichte, loc.cit. Seite 400). Die Vermeidung der Aerosolbildung ist deshalb besonders wichtig, weil die Aerosole nicht mit den üblichen Gaswäschern oder Tropfenabscheidern aus dem Gasstrom entfernt werden können.

Der vorliegenden Erfindung lag daher die Aufgabe zugrunde, ein Verfahren zur Entfernung von Ammoniak und gegebenenfalls Staub aus Abgasen, die bei der Herstellung von Düngemitteln anfallen, durch Behandeln der Abgase in einer Absorptionszone mit einer im Kreis geführten Ammoniumnitratlösung anzugeben, bei dem die Bildung von Ammoniumnitrataerosolen mit Sicherheit vermieden wird.

Es wurde nun gefunden, daß diese Aufgabe dadurch gelöst werden kann, daß die Ammoniumnitratlösung eine Temperatur $\vartheta$ von 20 bis 100°C und am Eintritt in die Absorptionszone einen pH-Wert aufweist, der zumindest einem aus der folgenden Formel sich ergebenden Wert entspricht,

$$pH \geqq \frac{105}{117,5 - \vartheta} + 0,16 \ln \frac{Y_{NH_3}}{100}$$

in der $Y_{NH_3}$ die Ammoniakkonzentration des zu behandelnden Gases in mg/Nm³ bedeutet.

Aus der Formel ergibt sich, daß der pH-Wert um so höher am Zulauf eingestellt werden muß, je höher die gewählte Temperatur innerhalb des Bereiches von 20 bis 100°C ist und je höher die Ammoniakkonzentration, ausgedrückt in mg $NH_3$/Nm³ ist, um die Bildung von Aerosolen mit Sicherheit zu vermeiden.

Bei der Durchführung des erfindungsgemäßen Verfahrens wird der im Kreis geführten Ammoniumnitratlösung vor ihrem Wiedereintritt in die Absorptionszone Salpetersäure zugesetzt, deren Menge selbstverständlich so zu bemessen ist, daß sie stöchiometrisch der Menge an Ammoniak entspricht, die in der Absorptionszone absorbiert und in Ammoniumnitrat übergeführt werden soll. Um den durch die obige Gleichung festgelegten Mindest-pH-Wert einhalten zu können, muß die im Kreis geführte Ammoniumnitratlösung um so größer sein, je höher der einzusetzende pH-Wert und je höher die $NH_3$-Konzentration in den zu reinigenden Gasen ist. Die im Kreis zu führende Mindestmenge an Ammoniumnitratlösung ergibt sich aus der zu absorbierenden $NH_3$-Menge und der zur Neutralisation dieser Menge erforderlichen Salpetersäuremenge unter der Annahme, daß die Salpetersäure in der wäßrigen Ammoniumnitratlösung vollständig dissoziiert ist zu

$$\dot{m}_{Kreis} = \frac{1000 \, \dot{m}_{NH_3}}{(1 - x_{NH_4NO_3}) \, 17,03 \cdot 10^{-pH}} \cdot$$

In dieser Gleichung bedeutet
$\dot{m}_{Kreis}$ = Massestrom Absorptionslösung
$\dot{m}_{NH_3}$ = Massestrom $NH_3$
$x_{NH_4NO_3}$ = Konzentration an $NH_4NO_3$ in der Ammoniumnitratlösung kg/kg.

Diese Mindestmenge gilt für den Fall, daß die Salpetersäure an einer Stelle zusammen mit der Ammoniumnitratlösung der Absorptionszone zugeführt wird. Selbstverständlich kann man die Salpetersäure, in mehrere Ströme aufgeteilt, auch in verschiedenen Höhen der Absorptionszone zuführen, wobei sich die Mindestmenge entsprechend der Zahl der zugeführten Salpetersäureströme erniedrigt. In jedem Fall gilt aber, daß der durch die Formel angegebene Mindest-pH-Wert nicht unterschritten wird.

Da die aus dem Kreislauf ausgeschleusten Waschlösungen zweckmäßig im Rahmen der Düngemittelproduktion aufgearbeitet werden und daher in diese zurückgeführt werden, z.B. in die Neutralisationsstufe beim Nitrophosphatprozeß, sollte die Konzentration der Waschlösung an Ammoniumnitrat zweckmäßig 40 bis 60 Gew.-% betragen. Für den Fall, daß mit dem erfindungsgemäßen Verfahren Abgase, die auch Staub enthalten, behandelt werden sollen, der Bestandteile enthält, die in der Waschlösung nicht löslich sind, sollte der Gehalt an ungelösten Bestandteilen 30 Gew.-% nicht übersteigen, um Störungen durch Verstopfungen oder Ablagerungen zu vermeiden.

Zur Inbetriebnahme einer Anlage genügt es, die Absorptionszone mit Salpetersäure der vorgeschriebenen Konzentration zu beschicken, da sich während des Betriebes Ammoniumnitrat ohnehin bildet. Als Absorptionszone kann eine Füllkörperkolonne verwendet werden.

Bei dem erfindungsgemäßen Verfahren fallen Ammoniumnitratlösungen bzw. Lösungen aus Ammoniumnitrat und anderen Düngemittelkomponenten in einer Menge an, die der absorbierten Ammoniakmenge und der ausgewaschenen Menge an Düngemittelstaub entsprechen. Diese Menge muß dem System entzogen werden. Die anfallenden Ammoniumnitrat und ggf. andere Düngemittelkomponenten enthaltenden Waschlösungen können vorteilhaft der in die Düngemittelgranulation eingespeisten Maische zugesetzt und zusammen mit dieser zu Düngemitteln aufgearbeitet werden, so daß die aus der Abluft abgeschiedenen Schadstoffe wieder verwertet werden.

Die in den Beispielen enthaltenen Prozentangaben bedeuten, falls nicht anderes vermerkt, Gewichtsprozente.

Beispiel 1

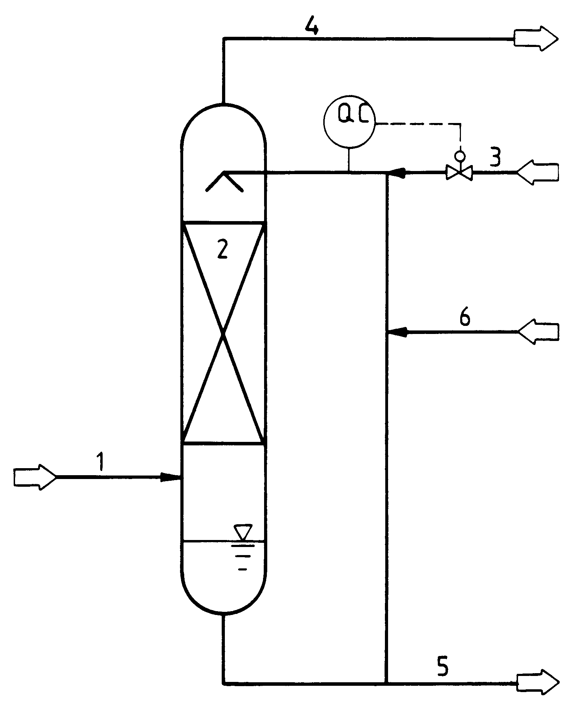

Die Bezugszeichen beziehen sich auf die Figur

Durch Leitung (1) wird der Füllkörperkolonne (2) ein Abgas mit einem $NH_3$-Gehalt von 1 g/Nm³ zugeführt und dort im Gegenstrom mit einer 50 %igen Ammoniumnitratlösung bei einer Temperatur von 40°C gewaschen. Die Füllkörperschütthöhe beträgt 4 m. Der Kolonnendurchmesser ist so bemessen, daß je m² freien Querschnitts 6000 m³/h Abgas durchgesetzt werden können.

Am Kolonnenkopf werden je m³ Abgas 6 l einer 50 %igen Ammoniumnitratlösung aufgegeben, deren PH-Wert mittels 60 %iger Salpetersäure, die durch Leitung (3) in den Waschkreislauf eingeführt wird, auf $\geq$ 1,7 eingestellt wird. Der die Kolonne durch Leitung (4) verlassende Gasstrom weist einen $NH_3$-Gehalt von < 50 mg/Nm³ und eine Beladung mit Ammoniumnitrataerosolen von < 10 mg/Nm³ auf.

Die im Sumpf der Absorptionskolonne (2) abgezogene Flüssigkeit wird zum Kopf der Kolonne rezirkuliert und, nachdem sie erneut mit Salpetersäure auf einen pH-Wert von > 1,7 angesäuert wurde, als Waschflüssigkeit eingesetzt.

Durch Leitung (5) kann ein Teil der Waschlösung, entsprechend der gebildeten $NH_4NO_3$-Menge abgezogen und beispielsweise der der Granulation zugeführten Maische zugesetzt werden. Das mit dem gewaschenen Gasstrom und der Ammoniumnitratlösung aus dem System ausgeschleuste Wasser kann durch Leitung (6) ergänzt werden.

Beispiel 2

Wie in Beispiel 1 beschrieben, wird ein durch Leitung (1) zugeführtes Abgas in einer Füllkörperkolonne (2) mit einer 50 %igen Ammoniumnitratlösung gewaschen. Das Abgas enthält 150 mg/Nm³ Ammoniak und 250 mg/Nm³ Düngemittelstaub. Entsprechend dem Wasserdampfgehalt des Abgases beträgt die Temperatur in der Kolonne 78°C. Der Kolonnendurchmesser ist so bemessen, daß je m² freien Querschnitts 2000 m³/h Abgas durchgesetzt werden können.

Am Kolonnenkopf werden je m³ Abgas 60 l einer 50 %igen Ammoniumnitratlösung aufgegeben, deren pH-Wert mittels 60 %iger Salpetersäure, die durch Leitung (3) in den Waschkreislauf eingeführt wird, auf $\geq$ 2,7 eingestellt wird. Der die Kolonne durch Leitung (4) verlassende Gasstrom weist einen $NH_3$-Gehalt von < 50 mg/Nm³ und einen Gesamt-Staubgehalt, bestehend aus Düngemittelstaub und Ammoniumnitrataerosolen, von < 50 mg/Nm³ auf.

Die Waschflüssigkeit wird, wie in Beispiel 1 beschrieben, rezirkuliert, der pH-Wert auf $\geq$ 2,7 eingestellt und wieder als Waschflüssigkeit eingesetzt.

Abzug und Verwertung der Waschlösung sowie die Ergänzung von Wasser erfolgen, wie in Beispiel 1 beschrieben.

Beispiel 3 (Vergleichsbeispiel)

Wie in Beispiel 2 beschrieben, wird ein durch Leitung (1) zugeführtes Abgas in einer Füllkörperkolonne (2) mit einer 50 %igen Ammoniumnitratlösung gewaschen. Das Abgas enthält 150 mg/Nm³ Ammoniak. Entsprechend dem Wasserdampfgehalt des Abgases beträgt die Temperatur in der Kolonne 78°C. Der Kolonnendurchmesser ist so bemessen, daß je m² freien Querschnitts 6000 m³/h Abgas durchgesetzt werden können.

Am Kolonnenkopf werden je m³ Abgas 3 l einer 50 %igen Ammoniumnitratlösung aufgegeben, deren pH-Wert mittels 60 %iger Salpetersäure, die durch Leitung (3) in den Waschkreislauf eingeführt wird, auf 1,0 eingestellt wird. Der die Kolonne durch Leitung (4) verlassende Gasstrom weist einen $NH_3$-Gehalt von < 50 mg/Nm³, jedoch einen Gehalt an Ammoniumnitrataerosolen von 125 mg/Nm³ auf.

**Patentansprüche**

1. Verfahren zur Entfernung von Ammoniak und gegebenenfalls Staub aus Abgasen, die bei der Herstellung von Düngemitteln anfallen, durch Behandeln der Abgase in einer Absorptionszone mit einer im Kreis geführten Ammoniumnitratlösung, dadurch gekennzeichnet, daß die Ammoniumnitratlösung eine Temperatur $\vartheta$ von 20 bis 100°C und am Eintritt in die Absorptionszone einen pH-Wert aufweist, der zumindest einem aus der folgenden Formel sich ergebenden Wert entspricht,

$$pH \geqq \frac{105}{117,5 - \vartheta} + 0,16 \ln \frac{Y_{NH_3}}{100}$$

in der $Y_{NH_3}$ die Ammoniakkonzentration des zu behandelnden Gases in mg/Nm³ bedeutet.

2. Verfahren nach Anspruch 1, dadurch gekennzeichnet, daß die Ammoniumnitratlösung ungelöste Feststoffe enthält.

3. Verfahren nach Ansprüchen 1 bis 2, dadurch gekennzeichnet, daß die Ammoniumnitratlösung eine Konzentration von 40 bis 60 Gew.-% aufweist.

4. Verfahren nach Ansprüchen 1 bis 3, dadurch gekennzeichnet, daß die Absorption in einer Füllkörperkolonne durchgeführt wird.

5. Verfahren nach Ansprüchen 1 bis 4, dadurch gekennzeichnet, daß man aus der im Kreis geführten Ammoniumnitratlösung einen Teilstrom abzweigt und diesen in die Düngemittelproduktion zurückführt.

## Claims

1. A process for removing ammonia and, where appropriate, dust from waste gases produced in the manufacture of fertilizers, by treatment of the waste gases in an absorption zone with an ammonium nitrate solution which is circulated, wherein the ammonium nitrate solution has a temperature $_\vartheta$ of from 20 to 100°C and, on entry into the absorption zone, a pH which corresponds at least to a value obtained from the following formula

$$pH \geqq \frac{105}{117.5 - \vartheta} + 0.16 \ln \frac{Y_{NH_3}}{100}$$

where $Y_{NH_3}$ is the ammonia concentration, in mg/m³ (STP), in the gas to be treated.

2. A process as claimed in claim 1, wherein the ammonium nitrate solution contains undissolved solids.

3. A process as claimed in either of claims 1 and 2, wherein the ammonium nitrate solution has a concentration of from 40 to 60% by weight.

4. A process as claimed in any of claims 1 to 3, wherein the absorption takes place in a packed column.

5. A process as claimed in any of claims 1 to 4, wherein a part stream is diverted from the circulated ammonium nitrate solution and is recycled to fertilizer production.

## Revendications

1. Procédé pour l'élimination d'ammoniac et éventuellement de poussière de gaz résiduaires que l'on rencontre au cours de la fabrication d'engrais par le traitement des gaz résiduaires dans une zone d'absorption par une solution de nitrate d'ammonium recyclée, caractérisé en ce que la solution de nitrate d'ammonium possède une température δ de 20 à 100°C et présente, à l'entrée dans la zone d'absorption, une valeur de pH qui correspond au moins à une valeur qui se déduit de la formule suivante

$$pH \geqq \frac{105}{117,5 - \delta} + 0,16 \ln \frac{Y_{NH_3}}{100}$$

dans laquelle $Y_{NH_3}$ désigne la concentration en ammoniac du gaz à traiter en mg/m³ normal.

2. Procédé suivant la revendication 1, caractérisé en ce que la solution de nitrate d'ammonium contient des substances solides non dissoutes.

3. Procédé suivant les revendications 1 et 2, caractérisé en ce que la solution de nitrate d'ammonium présente une concentration de 40 à 60% en poids.

4. Procédé suivant les revendications 1 à 3, caractérisé en ce que l'on entreprend l'absorption dans une colonne à corps de remplissage.

5. Procédé suivant les revendications 1 à 4, caractérisé en ce que l'on dérive un courant partiel de la solution de nitrate recyclée et en ce qu'on ramène ce courant partiel dans la production d'engrais.